# EUROPÄISCHE PATENTSCHRIFT

(11) **EP 1 110 440 B1**
(45) Veröffentlichungstag und Bekanntmachung des Hinweises auf die Patenterteilung: **23.01.2008**
(21) Anmeldenummer: 00127681.5
(22) Anmeldetag: 18.12.2000
(51) Int. Cl.: A01C 15/00

(54) **Landwirtschaftliche Verteilmaschine**
Agricultural distributing machine
Machine de distribution agricole

(30) Priorität: 24.12.1999 DE 19963110
(43) Veröffentlichungstag der Anmeldung: 27.06.2001
(73) Patentinhaber: Amazonen-Werke H. Dreyer GmbH & Co. KG, 49205 Hasbergen (DE)
(72) Erfinder: Dreyer, Heinz, Dr. Dipl.-Ing., 49205 Hasbergen (DE)

(56) Entgegenhaltungen:
- DE-A1- 19 749 232
- US-A- 3 175 739
- US-A- 5 501 405

## Beschreibung

Die Erfindung betrifft eine landwirtschaftliche Verteilmaschine gemäß des Oberbegriffes des Patentanspruches 1.

Derartige landwirtschaftliche Verteilmaschinen sind in vielfältiger Weise bekannt. Um ein gutes Nachrutschen des sich im Vorratsbehälter befindlichen Materials zu dem sich am unteren Ende der Trichterspitze befindlichen Dosierorgan, das aus einer Auslauföffnung besteht, das mittels eines Schiebers verschließbar und in seiner Öffnungsweite einstellbar ist, zu gewährleisten, sind die Trichterwände relativ steil ausgebildet. Dieses hat jedoch zur Folge, daß die Auslauföffnung nicht in allen Teilen genügend dicht an den Rand der Auslauföffnung herangeführt werden kann, so daß relativ große Restmengen im Vorratsbehälter verbleiben.

Eine derartige Verteilmaschine ist aus der US-A-5 501 405 bekannt.

Der Erfindung liegt die Aufgabe zugrunde, mit einfachen Mitteln die im Vorratsbehälter verbleibende Restmenge erheblich zu reduzieren.

Diese Aufgabe wird erfindungsgemäß durch die kennzeichnenden Merkmale des Patentanspruches 1 gelöst. Infolge dieser Maßnahmen ist der untere Trichterbereich an den sich beim Auslauf des Materials aus dem Vorratsbehälter durch die Auslauföffnung sich bildenden natürlichen Auslaufwinkel angepaßt ausgestaltet. Die Form der Trichterspitze im unteren Bereich ist also an den natürlich sich bildenden Auslaufwinkel anpassend ausgebildet. Hierdurch wird die sich im Vorratsbehälter verbleibende Restmenge deutlich reduziert und geht gegen Null, zumindest wenn die Auslauföffnung ganz geöffnet wird. Durch die ellipsenförmige Ausgestaltung der Trichterspitze wird eine vorteilhafte Formgebung der Trichterspitze erreicht.

In einer bevorzugten Ausführungsform sind die Trichterwände im unteren Bereich und/oder im Bereich des Rührorgans an den natürlichen Auslaufwinkel des auszubringenden Materials angepaßt ausgebildet.

Diese Form läßt sich beispielsweise dadurch erreichen, daß im Vorratsbehälter im Bereich der Trichterspitze Einlegeteile zur Schaffung der gewünschten Formausbildung angeordnet sind oder ein Einlegeteil eingelegt ist. Diese Maßnahmen bieten sich insbesondere zur Nachrüstung bereits sich in der Praxis befindlicher landwirtschaftlicher Verteilmaschinen an.

In bevorzugter Weise ist jedoch vorgesehen, daß die Trichterspitze aus einem Kunststoff-Formteil oder einem Tiefziehteil besteht und/oder die Trichterspitze als solche ausgebildet ist. Hierdurch läßt sich bereits bei der Herstellung eine optimal ausgebildete Trichterspitze schaffen.

Eine weitere Reduzierung der Restmenge läßt sich in Verbindung dadurch erreichen, daß das Rührorgan um eine horizontale Achse rotierend angetrieben ist, und spiralförmige Rührteile aufweist, welche von außen in Richtung der Trichterspitze das Material fördernd ausgebildet sind.

Weitere Einzelheiten der Erfindung sind der Beispielsbeschreibung und den Zeichnungen zu entnehmen. Hierbei zeigen
- Fig.1: die Trichterspitze eines Vorratsbehälters eines Düngerstreuers in perspektivischer Darstellung und in Teilansicht und
- Fig.2: der untere Teil der Trichterspitze in der Draufsicht II-II.

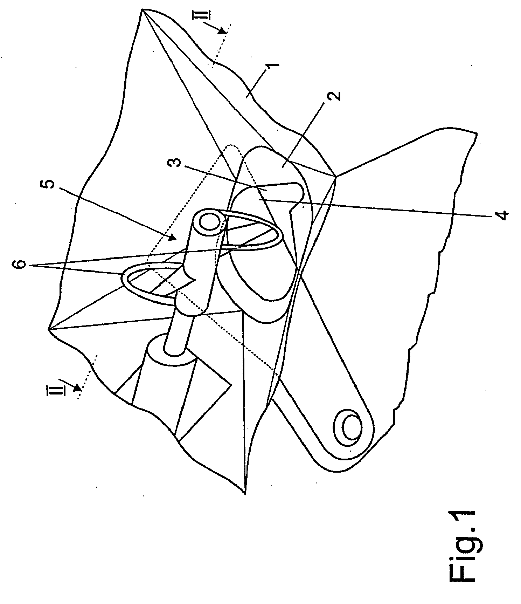

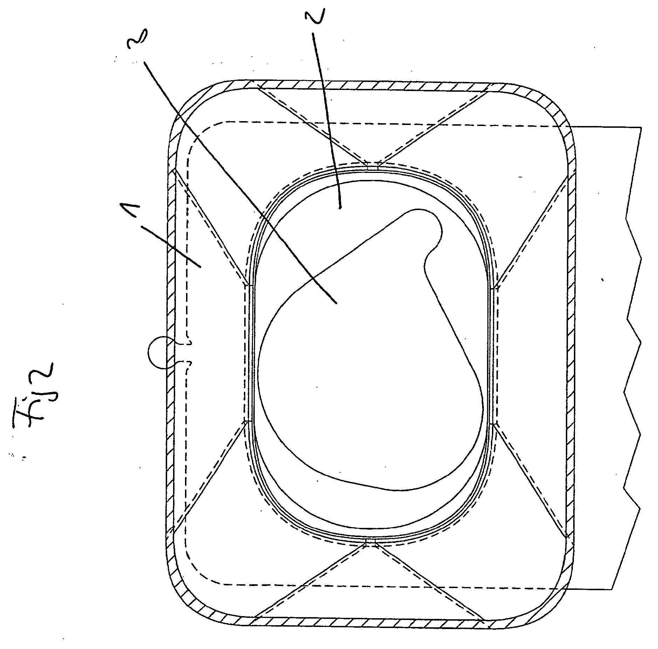

Die landwirtschaftliche Maschine weist einen trichterförmigen Vorratsbehälter auf, dessen untere Trichterspitze 1 in den Fig.1 und 2 dargestellt ist. Die Trichterspitze 1 weist die Bodenplatte 2 auf, in welche sich die Auslauföffnung 3 befindet, die mittels des Schiebers 4 in ihrer Öffnungenweite einstellbar oder mittels des Schiebers 4 zu verschließen ist. Oberhalb der Auslauföffnung 3 ist in der Trichterspitze 1 das rotierend angetriebene Rührorgan 5 angeordnet. Die Trichterwände weisen im unteren Bereich der Trichterspitze 1 bzw. im Bereich des Rührorgans 5 einen zumindest teilweise flacheren Verlauf als in ihrem oberen Bereich auf, wie insbesondere die Fig.1 zeigt. Das Rührorgan 5 weist um eine horizontale Achse rotierend angetriebene und spiralförmige Rührspirale 6 auf, welche von außen in Richtung der Trichtermitte das Material fördernd ausgebildet sind.

Die Trichterwände der Trichterspitze 1 sind in ihrem unteren Bereich an den natürlichen Auslaufwinkel des auszubringenden Materials angepaßt ausgebildet.

Der Querschnitt der Trichterspitze 1 ist im unteren Bereich annähernd ellipsenförmig ausgebildet. Die Trichterspitze 1 besteht aus einem Tiefziehteil.

Dadurch, daß durch die entsprechende Ausbildung der Trichterspitze 1 der untere Raum des Trichters gegenüber den herkömmlichen Trichterspitzen kleiner ausgebildet ist, verbleibt nur noch eine sehr geringe Restmenge, zumindest wenn die Auslauföffnung durch die entsprechende Stellung des Schiebers vollständig geöffnet ist, im Vorratsbehälter bzw. in der Trichterspitze.

Es ist auch möglich, daß die Trichterspitze 1 als Kunststoff-Formteil ausgebildet ist. Auch ist es möglich, daß in dem Vorratsbehälter in dem Bereich der Trichterspitze Einlegeteile zur Schaffung der gewünschten Formausbildung angeordnet sind oder ein Einlegeteil angeordnet ist.

## Patentansprüche

1. Landwirtschaftliche Verteilmaschine mit zumindest einem trichterförmigen Vorratsbehälter, dessen Trichterspitze eine Bodenplatte aufweist, in welcher zumindest eine mittels eines Schiebers verschließbare und in ihrer Öffnungsweite einstellbare Auslauföffnung angeordnet ist, wobei oberhalb der Auslauföffnung in der Trichterspitze ein angetriebenes Rührorgan sich befindet, **dadurch gekennzeichnet, dass** die Trichterwände im unteren Bereich der Trichterspitze (1) bzw. im Bereich des Rührorgans (5) zumindest teilweise einen flacheren Verlauf als in ihrem oberen Bereich aufweisen, dass der Querschnitt der Trichterspitze (1) im unteren Bereich zumindest annähernd ellipsenförmig ausgebildet ist.

2. Verteilmaschine nach Anspruch 1, **dadurch gekennzeichnet, dass** die Trichterwände im unteren Bereich und/oder im Bereich des Rührorgans (5) an den natürlichen Auslaufwinkel des auszubringenden Materials angepasst ausgebildet sind.

3. Verteilmaschine nach einem oder mehreren der vorstehenden Ansprüche, **dadurch gekennzeichnet, dass** im Vorratsbehälter im Bereich der Trichterspitze (1) Einlegeteile zur Schaffung der gewünschten Formausbildung angeordnet sind oder ein Einlegeteil angeordnet ist.

4. Verteilmaschine nach einem oder mehreren der vorstehenden Ansprüche, **dadurch gekennzeichnet, dass** die Trichterspitze (1) aus einem Kunststoff-Formteil oder einem Tiefziehteil besteht oder die Trichterspitze als solche ausgebildet ist.

5. Verteilmaschine nach einem oder mehreren der vorstehenden Ansprüche, **dadurch gekennzeichnet, dass** das Rührorgan (5) um eine horizontale Achse rotierend angetrieben ist und spiralförmige Rührteile (6) aufweist, welche von außen in Richtung der Trichtermitte das Material fördernd ausgebildet sind.

## Claims

1. Agricultural distributor including at least one funnel-shaped hopper, the funnel tip of which includes a base plate, in which is disposed at least one discharge opening, which is closable by means of a slide and has an adjustable opening width, wherein a driven agitator member is situated above the discharge opening in the funnel tip, **characterised in that** the funnel walls in the lower region of the funnel tip (1) or respectively in the region of the agitator member (5) are developed, at least partially, in a flatter manner than in its upper region, **in that** the cross-section of the funnel tip (1) in the lower region is at least approximately elliptical.

2. Distributor according to claim 1, **characterised in that** the funnel walls are adapted in the lower region and/or in the region of the agitator member (5) to the natural angle of discharge of the material to be deposited.

3. Distributor according to one or more of the preceding claims, **characterised in that** insertion parts are disposed, or one insertion is disposed in the hopper in the region of the funnel tip (1) to create the desired shape.

4. Distributor according to one or more of the preceding claims, **characterised in that** the funnel tip (1) is produced from a plastics material shaped part or a deep-drawn part or the funnel tip is in the form of such.

5. Distributor according to one or more of the preceding claims, **characterised in that** the agitator member (5) is rotatingly driven about a horizontal axis and includes spiral-shaped agitator parts (6), which are designed to convey the material from the outside towards the centre of the funnel.

## Revendications

1. Machine distributrice agricole comportant au moins un réservoir d'alimentation en forme de trémie dont la pointe est équipée d'une plaque de fond munie d'au moins un orifice de sortie qui peut être fermé et dont l'ouverture peut être réglée par un tiroir,
et au-dessus de l'orifice de sortie, dans la pointe de la trémie un organe agitateur, entraîné,
**caractérisée en ce que**
dans la région inférieure de la pointe (1) de la trémie ou dans la région de l'organe agitateur (5) les parois de la trémie ont au moins en partie un tracé plus plat que dans leur région supérieure, et la section transversale de la pointe (1) de la trémie, dans sa région inférieure, est au moins sensiblement en forme d'ellipse.

2. Machine distributrice selon la revendication 1,
**caractérisée en ce que**
les parois de la trémie, dans la région inférieure et/ou dans la région de l'organe agitateur (5), sont réalisées de façon adaptée à l'angle de talus naturel de la matière à distribuer.

3. Machine distributrice selon une ou plusieurs des revendications précédentes,
**caractérisée en ce que**
au niveau de la pointe (1) de la trémie, le réservoir d'alimentation comporte, un ou des inserts pour créer la forme souhaitée.

4. Machine distributrice selon l'une ou plusieurs des revendications précédentes,
**caractérisée en ce que**
la pointe (1) de la trémie est formée de parties moulées en matière plastique ou d'une pièce réalisée en emboutissage profond ou la pointe de trémie est réalisée en tant que telle.

5. Machine distributrice selon l'une ou plusieurs des revendications précédentes,
**caractérisée en ce que**
l'organe agitateur (5) est entraîné en rotation autour d'un axe horizontal et comporte des parties d'agitateur (6) en forme de spirales, réalisées de façon à entraîner la matière de l'extérieur en direction du milieu de la trémie.
